# EUROPÄISCHE PATENTANMELDUNG

(11) **EP 2 923 881 A1**
(43) Veröffentlichungstag der Anmeldung: **30.09.2015**
(21) Anmeldenummer: 14177158.4
(22) Anmeldetag: 15.07.2014
(51) Int. Cl.: B60L 15/20, B60L 15/22, H02P 6/00

(54) **Kraftfahrzeug mit Elektroantrieb**

(30) Priorität: 24.03.2014 CH 4392014
(71) Anmelder: Eisenmann, Siegfried A., 88326 Aulendorf (DE)
(72) Erfinder: Eisenmann, Siegfried A., 88326 Aulendorf (DE)
(74) Vertreter: Kaminski Harmann

(57) **Zusammenfassung**

Die Erfindung betrifft ein Kraftfahrzeug mit einem Wechselstrom-Elektroantrieb als Fahrantrieb, dessen Drehmoment an zumindest ein Antriebsrad des Kraftfahrzeugs übertragbar ist, einem Elektrospeicher zur Bereitstellung von elektrischer Energie für den Fahrantrieb und einem Stromrichter zur Umwandlung einer Gleichspannung des Elektrospeichers in eine Wechselspannung, mit welcher der Elektroantrieb angesteuert wird.

Erfindungsgemäss ist dabei ein elektrischer Gangumschalter vorgesehen, welcher als eine elektrische Schalteinrichtung zwischen dem Stromrichter und dem Elektroantrieb ausgebildet ist. Mit dieser Schalteinrichtung ist vom Stromrichter zum Elektroantrieb zwischen unterschiedlichen Spannungsübersetzungsverhältnissen für die Wechselspannung umschaltbar.

## Beschreibung

Die Erfindung betrifft ein Kraftfahrzeug mit Elektroantrieb nach dem Oberbegriff des Anspruchs 1, einen elektrischen Gangumschalter, sowie ein Verfahren zur elektrischen Gangumschaltung nach Anspruch 9.

Im Speziellen betrifft die Erfindung ein Kraftfahrzeug mit Elektroantrieb, bei dem der Traktionsantrieb aus einem Elektrospeicher betrieben wird. Dieser Elektrospeicher ist dabei als mehrfach wiederaufladbare Batterie bzw. Akkumulator ausgebildet, optional kann das Fahrzeug mit einem Range-Extender ausgestattet sein. Beispiele für Hybridfahrzeuge finden sich etwa in EP 2 039 554, EP 2 173 593 oder DE 11 2011 103 538, wobei auch das in der Schweizer Patentanmeldung Nr. 01589/13 (welche hier per Referenz mit einbezogen wird) beschriebene Konzept von mit Teilbatterien angewandt werden.

Zum Antrieb eines Kraftfahrzeugs sind verhältnismässig hohe Leistungen, insbesondere kurzzeitige Spitzenleistungen erforderlich. Hat der Elektroantrieb in einem Elektrofahrzeug auch nur eine verhältnismässig bescheidene Leistung von z.B. 20 kW, so wird z.B. eine 200V Batterie mit einem Strom von 100A belastet, bei 100 kW und 400V Batterie bis zu 250A. Hohe Ströme, sei es bei der Be- oder Entladung, belasten den Elektrospeicher und dessen Lebensdauer und führen zu Wärmeentwicklung. Die für diese Ströme erforderlichen grossen Leiterquerschnitte sind aufwändig und erschweren die Leitungsführung. Eine noch weitere Erhöhung der Batteriespannung (z.B. in den Kilovolt-Bereich) ist im Fahrzeug meist nicht erwünscht, z.B. aus Sicherheitsaspekten und da bei Serienschaltung vieler Batteriezellen der Ausfall nur einer Batteriezelle die gesamte Batterie beeinträchtigt.

Batterien können zwar kurzzeitig über ihre Nennleistung belastet werden, jedoch reduziert dies deren Haltbarkeit bzw. die Zyklenlebensdauer. Beispielsweise ist bei einer Belastung mit z.B. 1C (Strombelastung = Nennkapazität/1h) eine höhere Batterielebensdauer zu erwarten, als z.B. 6C.

Es ist daher eine Aufgabe der vorliegenden Erfindung ein batteriebetriebenes Fahrzeug mit elektrischem Fahrantrieb, insbesondere ein schienenungebundenes, nicht Oberleitungs- oder Leitschienenversorgtes Strassenfahrzeug wie z.B. ein Automobil oder ein zwei oder dreirädriges Fahrzeug mit elektrischem Fahrantrieb, zu Verbessern, insbesondere bezüglich der Lebensdauer bzw. Zyklenhaltbarkeit der Fahrantriebs-Batterie. Es ist dabei ein spezieller Teil der Aufgabe der vorliegenden Erfindung eine übermässige Strombelastung der Batterie zu Verhindern.

Es ist auch eine Aufgabe der vorliegenden Erfindung ein Fahrzeug mit elektrischem Fahrantrieb bereitzustellen, bei welchem Batterie und Antriebselektronik sparsam und ressourcenschonend ausgelegt werden können, ohne dabei auf einen von konventionellen Verbrennungskraftfahrzeugen bekannten Fahrkomfort verzichten zu müssen.

Eine spezielle Aufgabe kann dabei auch sein, ein Elektrofahrzeug bereitzustellen, welches ein mit konventionellen Schaltgetriebefahrzeugen vergleichbares Fahrverhalten und/oder Fahrgefühl bereitstellt, insbesondere wobei mechanische Getriebeverluste vermieden, sowie Gewicht und Anzahl der Verschleissteile reduziert wird.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft eine Einrichtung in einem Kraftfahrzeug und ein Kraftfahrzeug, speziell um ein schienenungebundenes Straßenfahrzeug, welches eine ebensolche Einrichtung aufweist. Das Fahrzeug weist einen Wechselstrom-Elektroantrieb als Fahrantrieb auf, insbesondere mit zumindest einem Synchron-Elektromotor dessen Drehmoment an zumindest ein Antriebsrad des Kraftfahrzeugs übertragbar ist. Der Elektroantrieb wird mit einem Elektrospeicher zur Bereitstellung von elektrischer Energie für den Fahrantrieb und einem Stromrichter zur Umwandlung einer Gleichspannung des Elektrospeichers in eine Wechselspannung betrieben. Die dabei generierte Wechselspannung kann dabei insbesondere in ihrer Frequenz und/oder Spannung variierbar sein.

Entsprechend der vorliegenden Erfindung ist dabei ein elektrischer Gangumschalter vorgesehen, welcher als eine elektrische Schalteinrichtung zwischen dem Stromrichter und dem Elektroantrieb ausgebildet ist, mit welcher Schalteinrichtung im elektrischen Übertragungspfad vom Stromrichter zum Elektroantrieb zwischen unterschiedlichen Spannungsübersetzungsverhältnissen für die Wechselspannung umschaltbar ist.

Dabei ist mit der Schalteinrichtung insbesondere zwischen
■ einem ersten Übertragungspfad zwischen dem Stromrichter und dem Elektroantrieb, welcher ein erstes Spannungsübersetzungsverhältnis für die Wechselspannung aufweist, als erstem Gang, und
■ zumindest einem zweiten Übertragungspfad zwischen dem Stromrichter und dem Elektroantrieb welcher ein, von dem ersten unterschiedliches, zweites Spannungsübersetzungsverhältnis für die Wechselspannung aufweist, als zumindest zweitem Gang
umschaltbar.

Die Schalteinrichtung ist also anders ausgedrückt derart ausgebildet und angeordnet, dass mit dieser zwischen dem Stromrichter und dem Elektroantrieb wahlweise zwischen
■ einem erstem Gang mit einem ersten Spannungsübersetzungsverhältnis für die Wechselspannung und
■ zumindest zweitem Gang mit zumindest einem zweiten, von dem ersten unterschiedlichen, Spannungsübersetzungsverhältnis für die Wechselspannung
eine Umschaltung erfolgen kann. Dabei erfolgt diese Umschaltung im Vergleich zur Frequenz der Wechselspannung mit einer geringeren Häufigkeit, also insbesondere derart, dass die Zeitdauer zwischen zwei Umschaltungen grösser ist als die Periodendauer der Wechselspannung, insbesondere um zumindest ein hundertfaches grösser oder mehr.

Es ist also ein elektrischer Gangumschalter in Form einer Schalteinrichtung vorgesehen, welche derart ausgebildet und angeordnet ist, dass mit diesem zwischen dem Stromrichter und dem Elektroantrieb eine Umschaltbarkeit zwischen zumindest zwei unterschiedlichen Strom-Spannungs-Übersetzungsverhältnissen durchführbar ist. Das erste Spannungsübersetzungsverhältnis, respektive der Übertragungspfad welcher dieses Spannungsübersetzungsverhältnis aufweist, kann dabei mit einem ersten induktiven Übertrager, vorzugsweise einem Transformator, für die Wechselspannung ausgebildet sein.

Auch zumindest eines der zweiten Spannungsübersetzungsverhältnisse kann mit zumindest einem zweiten induktiven Übertrager für die Wechselspannung zwischen dem Stromrichter und dem Elektroantrieb ausgebildet sein. Dabei können der erste und zumindest der zweite induktive Übertrager mit einem gemeinsamen Magnetkern ausgebildet sein. In einer Ausführungsform können beispielsweise der erste und zumindest der zweite induktive Übertrager als ein Wechselstromtransformator mit mehreren Wicklungen oder Abzapfungen an der Primär- und/oder Sekundärseite ausgebildet sein.

Es kann aber auch eines der zweiten Spannungsübersetzungsverhältnisse als eine direkte elektrische Verbindung zwischen den Stromrichter und den Elektroantrieb (also nicht über einen magnetischen Übertrager, sozusagen transformatorlos) ausgebildet sein. Dabei ist die Enumeration der Spannungsübersetzungsverhältnisse nicht zwingend mit einer Stufenfolge der Übersetzungsverhältnisse gleichzusetzen.

Der Betrieb des Elektroantriebs innerhalb einer Schaltstufe der Schalteinrichtung eines solchen Gangs, also während mit der Schalteinrichtung des Gangumschalter eines der Übersetzungsverhältnisse selektiv geschaltet ist, erfolgt mit einer gesteuerten oder geregelten Ansteuerung des Elektroantriebes mit einer Frequenz- und/oder Spannungsvariation durch den Stromrichter. Hierfür ist eine entsprechende Ansteuerungslogik vorgesehen. Bei Schienenfahrzeugen mit einphasiger Wechselspannungsversorgung wurden in Zeiten, in welchen leistungsfähige Stromrichterschaltungen noch nicht zur Verfügung standen, Anfahrschaltungen mit einem Stufen-Transformator ausgeführt, siehe z.B. DE 927 338, DE 627 106 oder DE 976 157. Im Gegensatz zur vorliegenden Erfindung handelt es sich dabei jedoch um ein gänzlich anderes technisches Gebiet bei welchem eine Hochspannungsversorgung mit einer Wechselspannung von vorgegebener Frequenz als Energiequelle vorliegt und kein Stromrichter zum Einsatz kommt.

Der Wechselstrom-Elektroantrieb kann etwa ein permanentmagneterregter Synchron-Elektromotor sein, welcher beispielsweise als Einphasen- oder Mehrpahsen-Wechselstrom Drehfeldmotor ausgebildet sein kann. Neben einer klassischen Drehmomentübertragung zu einem Antriebsrad über ein Getriebe, Ketten und/oder eine Wellen, kann der Elektroantrieb auch als Radnabenmotor ausgebildet sein.

Die Erfindung betrifft dabei speziell einen elektrischen Gangumschalter in einen Stromkreis zwischen einem Stromrichter für eine Spannung eines Elektrospeichers und einem Wechselstrom-Elektroantriebs eines Strassenfahrzeugs, welcher eine elektrische Schalteinheit aufweist, mit welcher zwischen einem ersten und zumindest einem zweiten Gang des elektrischen Gangumschalters umschaltbar ist. Dabei ist der erste Gang mit einer ersten transformatorischen Spannungsübersetzung zwischen dem Wechselrichter und dem Elektroantrieb ausgebildet. Der zweite und/oder weitere Gänge sind mit einer jeweils zweiten, von den anderen Gängen jeweils unterschiedlichen induktiven Strom/Spannungsübersetzung ausgebildet, wobei die Strom/Spannungsübersetzung bei einem der Gänge auch mit einer 1:1 Übersetzung in Form einer direkten Durchschaltung zwischen dem Wechselrichter und dem Elektroantrieb ausgebildet sein kann.

Die Erfindung betrifft entsprechend auch ein Verfahren zur elektrischen Gangumschaltung in einem batteriebetriebenen, elektrisch angetriebenen Strassenfahrzeug, bei welchem ein Umschalten zwischen
- einem ersten Gang, in welchem ein erstes Spannungsübersetzungsverhältnis zwischen einer wechselgerichteten Batteriespannung und einer, einem Fahrantrieb-Elektromotor zugeführten Spannung vorliegt, und
- zumindest einem zweiten Gang, in welchem ein von dem ersten Spannungsübersetzungsverhältnis abweichendes, zweites Spannungsübersetzungsverhältnis zwischen der wechselgerichteten Batteriespannung am Stromrichterausgang und der, dem Fahrantrieb-Elektromotor zugeführten Spannung vorliegt,
durchgeführt wird.

Dabei kann insbesondere zumindest das erste oder eines der zweiten Spannungsübersetzungsverhältnisse mit einer induktiven Übertragung erfolgen. Das Verfahren kann dabei auch automatisiert von einer Steuerungselektronik im Strassenfahrzeug, beispielsweise auch unter Mitwirkung eines entsprechenden Computerprogrammprodukts erfolgen. Das Umschalten kann dabei insbesondere abhängig von der aktuellen Fahrgeschwindigkeit bzw. von der damit korrespondierenden Drehzahl des Elektroantriebs erfolgen.

Die Erfindung betrifft anders ausgedrückt ein Schienenungebundenes, batteriebetriebenes Strassenfahrzeug mit einem elektrischen Gangumschalter, welcher mit einem Transformator in einem Stromkreis zwischen einem in seiner Ausgangsspannung und /oder Frequenz variablen Wechselrichter und einem elektrischen Fahrantrieb ausgebildet ist. Der Transformator ist dabei mit mehreren wählbaren Spannungsübersetzungsverhältnissen als Gängen ausgebildet, zwischen welchen Gängen mit einer Schalteinrichtung wahlweise umgeschaltet werden kann.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
Fig. 1 eine erste Ausführungsform eines Beispiels eines erfindungsgemässen Fahrzeug-Konzeptes in einem Blockschema;
Fig. 2 ein vereinfachtes Schema einer beispielhaften Ausführungsform eines erfindungsgemässen Gang-Transformators für ein Elektrofahrzeug;
Fig. 3 ein Beispiel einer Ausführungsform eines Zugkraftdiagramms eines Elektrofahrzeugs entsprechend der vorliegenden Erfindung;
Fig. 4 ein vereinfachtes Beispiel einer Ausführungsform einer erfindungsgemässen elektrische Gangumschaltung mit einer Schalteinrichtung für eine induktiven Übersetzung mit unterschiedlichen Spannungsübersetzungsverhältnissen in einem Blockschema;
Fig. 5 eine beispielhafte tabellarische Darstellung von erfindungsgemässen Umschaltungen der Schaltelemente der beispielhaften Schalteinrichtung von Fig. 4.

Die Figuren sind dabei, sofern nicht explizit angegeben, nicht als massstäblich zu betrachten. Gleiche oder funktionell ähnliche Merkmale sind, insoweit praktikabel, durchgängig mit denselben Bezugszeichen versehen und werden gegebenenfalls mit einem Kleinbuchstaben als Index unterschieden.

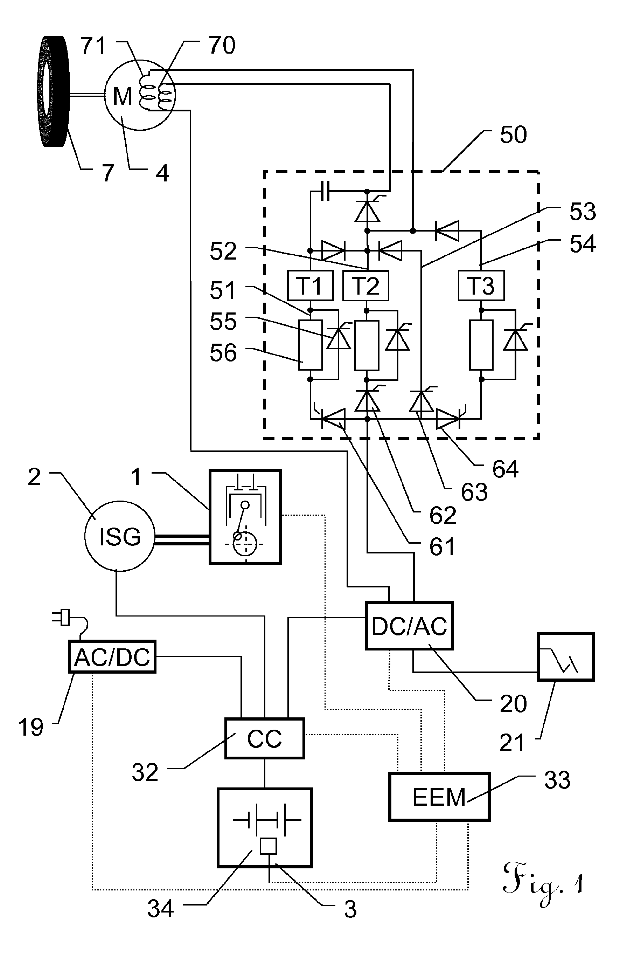

**Fig. 1** zeigt ein Beispiel, bei welchem ein Blockdiagramm einer erfindungsgemässen Ausführungsform gezeigt ist. Die Antriebsräder 7 des Fahrzeugs sind dabei z.B. über ein Differential 6 und/oder ein schaltbares oder nichtschaltbares Getriebe 5 von einem oder von mehreren Elektroantrieben 4 angetrieben, oder mit Radnabenmotoren 4a ausgebildet. Der oder die Elektroantriebe 4 des Elektrofahrzeugs sind dabei als rotative Wechselstrom-Antriebe ausgebildet, speziell z.B. wie zuvor beschrieben als permanentmagneterregte Synchronmotoren. Der Wechselrichter 20 stellt eine, in seiner Ausgangsfrequenz, Ausgangsspannung und/oder seinem Ausgangsstrom steuer- bzw. regelbare elektrische Ansteuerung des Motors 4 bereit, gegebenenfalls auch mit einer Drehlagenbestimmung am Motor 4 zur Rückkopplung der aktuellen Rotorlage des Motors 4 für eine Regelung, Kommutierung, etc. Der Elektrospeicher 3 ist als wiederaufladbare Batterie ausgebildet, Beispielsweise als wiederaufladbarer Lithium-Akkumulator, wobei auch etliche andere Batterietechnologien bekannt sind und auch angewandt werden. Erfindungsgemäss kann anstelle oder zusätzlich zum Elektrospeicher 3 jedoch auch eine andere elektrische Energiequelle genutzt werden, wie z.B. Solarzellen, Brennstoffzellen, etc.

Ein optionaler Range-Extender mit einer Verbrennungskraftmaschine 1 gekoppelt mit einem Elektrogenerator 2, eine Netzladeeinrichtung 19, eine CC (Charge-Control)-Einheit 32 eine EEM (Elektrische Energie Management)-Einheit 33 sind ebenfalls gezeigt, welche den Energiefluss steuern bzw. regeln. Ein Batterie-Monitoring-System 34 überwacht den Zustand der Batterie 3.

Ein Beispiel einer erfindungsgemässen elektrischen Gangumschaltung ist dabei schematisch in Block 50 dargestellt. Die in Block 50 gezeigten Komponenten sind dabei symbolisch für deren Funktion zu betrachten und nicht zwingend als eine konkrete Ausführungsform einer elektrischen Schaltung mit den gezeigten Dioden, Thyristoren, etc. zu verstehen. Anhand dieses Beispiels wird im Folgenden die Erfindung erläutert.

Bei niedrigen Motordrehzahlen und gleichzeitig hohen Motor-Drehmomenten (z.B. beim Anfahren oder bei Bergfahrten des Kraftfahrzeugs) treten hohe Motorleiterströme auf, jedoch ist die Motorspannung verhältnismässig gering, da die Induktionsspannung (EMK) zumindest annähernd proportional zur Motor-Drehzahl ist. Diese hohen Ströme sollten wie erwähnt möglichst von der Batterie 3 und/oder dem Stromrichter 20 für den Fahrantrieb 4 ferngehalten werden.

Erfindungsgemäss wird eine hohe Strombelastung vermieden, indem ein erster Transformator T1 mit einem entsprechenden Übersetzungsverhältnis im Wechselstromkreis der elektrischen Antriebsversorgung zwischengeschaltet wird. Beispielsweise mit einem Übersetzungsverhältnis von einer höheren Spannung auf der Batterieseite des Stromrichters 20 hin zu einer niedrigeren Spannung am Motor 4 (respektive gleichbedeutend einer Übersetzung von niedrigen Strömen auf der Stromrichterseite hin zu höheren Strömen auf der Motorseite). Innerhalb des dabei entstehenden Übersetzungs-Bereichs wird dabei Frequenz, Strom und Spannung mit Hilfe des Stromrichters 20 entsprechend des aktuellen Elektromotorbetriebspunkts geregelt oder gesteuert. Der erste Transformator T1 ist dabei insbesondere speziell auf diesen Frequenz-, aber auch Spannungs- und Strombereich ausgelegt beispielsweise mit angepassten Leiterquerschnitten, Induktivitätswerten, etc. Die Auslegung des Transformators T1 erfolgt dabei speziell auf möglichst niedrige Verluste in dem für diesen vorgesehenen Betriebsbereich, insbesondere im Hinblick auf den in diesem Bereich von Transformator T1 in Zusammenwirkung mit dem Gesamtantriebssystem erzielbaren Leistungsfaktor COS (Phi). Dabei ist also insbesondere der Leistungsfaktor COS (Phi) für das jeweilige Übersetzungsverhältnis und die bei diesem auslegungsgemäss auftretenden elektrischen Kennwerten optimiert. Speziell ist dabei der COS (Phi) des Transformators dem Leistungsfaktor COS (Phi) des Elektroantriebs in dem entsprechenden Teil-Fahrgeschwindigkeitsbereich des Fahrzeugs und somit dem zugehörigem Drehzahlbereich des Elektroantriebs in dem jeweiligen Gang angepasst, also insbesondere zumindest annähernd gleich.

Steigt die Geschwindigkeit des Fahrzeugs und die Drehzahl des Motors 4, so steigt die Motorspannung. Erfindungsgemäss wird dann auf einen zweiten Transformator T2 mit einem Übersetzungsverhältnis umgeschaltet, bei welchem bei gleicher Eingangsspannung die Ausgangsspannung höher ist als beim ersten Transformator T1. Innerhalb des dieser Übersetzung also in diesem Betriebsbereich - welcher hier auch als Gang bezeichnet wird - wird wiederum Frequenz, Strom und Spannung mit Hilfe des Wechselrichters 20 entsprechend des aktuellen Elektromotor-Betriebspunkts gesteuert oder geregelt. Der zweiten Transformator T2 ist wiederum für seinen Betriebsbereich entsprechend ausgelegt.

In analoger Weise können auch weitere Transformatoren wie z.B. Transformator T3 vorhanden sein, welche weitere Gänge im Sinne eines elektrischen Gangumschalters ausbilden.

Es kann auch einen Gang vorhanden sein, in welchem eine 1:1 Übersetzung erfolgt. Dabei ist ein Transformator nicht zwingend erforderlich, sondern die 1:1 Übersetzung kann alternativ auch mit einer direkten, transformatorlosen Verbindung von Wechselrichter und Elektroantrieb erfolgen.

Im gezeigten Beispiel bildet also der Pfad 51 mit Transformator T1, welcher mit dem Schaltelement 61 wählbar ist, den ersten Gang und der Pfad 52 mit Transformator T2, welcher mit Schaltelement 62 wählbar ist, den zweiten Gang. Über Schaltelement 63 lässt sich der dritte Gang wählen, bei welchem eine 1:1 Übersetzung mit einer Transformatorlosen Direktverbindung erfolgt. Der vierte Gang wird mit dem über Schaltelement 64 wählbaren Transformator T3 über Pfad 54 realisiert.

Eine Abstufung der Gänge in Nummerierungsreihenfolge ergibt sich beispielsweise wenn:
■ im 1. Gang das Übersetzungsverhältnis von T1 kleiner 1,
■ im 2. Gang das Übersetzungsverhältnis von T2 ebenfalls kleiner 1, jedoch grösser als jenes von T1,
■ im 3. Gang eine direkte Verbindung mit Übersetzung 1, und
■ im 4. Gang mit T3 eine induktive Übertragung mit einer Spannungsübersetzung grösser 1 ausgebildet ist.

Die exakten Werte der Übersetzungsverhältnisse können dabei durch Simulation oder empirisch ermittelt werden. Beispielsweise können diese Übersetzungsverhältnissen in einem weiter unten gezeigten Zugkraftdiagramm eine gewünschte Abstufung bilden (z.B. in möglichst guter Annäherung an die theoretische Ideallinie oder indem häufig auftretende Fahrsituationen bei möglichst hohem Wirkungsgrad abgedeckt sind). In einem anderen Beispiel können aber auch alle Gänge mit Transformatoren jeweils unterschiedlicher Übersetzungsverhältnisse gebildet werden, wobei eines der Übersetzungsverhältnisse durchaus auch zumindest annähernd 1:1 sein kann.

Die induktiven Übertragungen können dabei in einem ersten Beispiel mittels einer Mehrzahl von diskreten, klassischen galvanisch getrennten Transformatoren T1, T2, T3 erfolgen, also etwa mit jeweils einem Transformator für einen der Gänge - gegebenenfalls abzüglich eines Gangs mit direkter Verbindung. Neutralgang und/oder Rückwärtsgang werden mittels entsprechender Ansteuerung des Stromrichters 20 realisiert. In einem zweiten Beispiel können mehrere der Transformatoren T1, T2, T3 auch einen gemeinsamen Magnetkern aufweisen. Es kann aber in einem dritten Beispiel neben einer Mehrzahl von diskreten Transformatoren auch ein einziger Transformator mit mehren Anzapfung der Primär- und/oder Sekundärwicklung für die erfindungsgemässe Gangwahl genutzt werden.

Das Verhalten und die Bedienprinzipien können ähnlich wie bei einem konventionellen mechanischen Schalt- oder Automatikgetriebe bei Verbrennungskraftfahrzeugen ausgebildet werden, also quasi ein elektrisches Stufengetriebe, bei welchem durch den Transformator-Schaltmechanismus keine mechanische sondern eine elektrische Übersetzung in Stufen der Fahrgeschwindigkeit angepasst wird und innerhalb dieser Stufen mit dem Stromrichter 20 eine Variation der Motoransteuerung 20 vorgenommen wird. Durch die vielfältigen Eingriffs-, Mess- und Regelungsmöglichkeiten des erfindungsgemässen elektrischen Getriebe-Pendants sind neben einer Nachbildung eines konventionellen Schaltgetriebeverhaltens aber auch neuen Möglichkeiten der Ansteuerung der Schaltvorgänge, beispielsweise ein nahtlos wirkender Schaltübergang durchführbar.

Um Stromstösse bzw. Spannungsstösse beim Schalten der Transformatoren zu vermeiden, können beispielsweise die Schaltelemente 61, 62, 63, 64 vorzugsweise im Bereich der Strom-Nulldurchgänge des Wechselstroms geschaltet werden, oder es können optional die in der Figur gezeigten Dämpfer-Vorschaltwiderstände 56 (oder entsprechend komplexere elektrische Schaltstrukturen zu diesem Zwecke) vorgesehen sein, welche zudem mittels Überbrückungsschalter 55 im stationären Betrieb überbrückbar ausgebildet sein können.

Beispielsweise können auch die im Wechselrichter ohnehin vorhandenen Leistungsschaltern für eine PWM-Ansteuerung zugleich als Teil der Schalteinrichtung für eine Selektion eines Übersetzungsverhältnisses der induktiven Übertragung genutzt werden. Es kann in einer anderen Ausführungsform aber auch, wie in der Figur gezeigt, eine vom Stromrichter 20 getrennte, eigenständige elektrische Gangumschalteinheit 50 angewandt werden, welche zwischen den Stromrichter 20 und den Elektroantrieb 4 geschaltet ist, und welche die zur Gangumschaltung nötigen Schaltelemente 61,62,63,64 induktive (Leistungs-) Übertrager T1, T2, T3 und allfällige ergänzende Hilfseinrichtungen 55, 65, etc. aufweist.

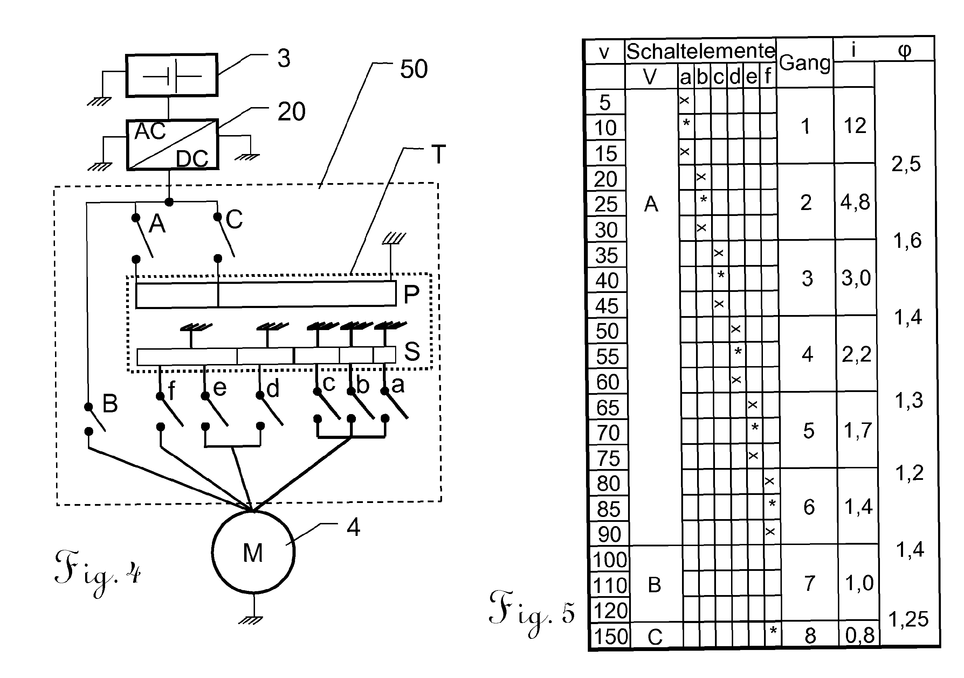

Neben der in dieser Figur beispielhaft dargestellten Ausführungsform mit einer Umschaltung auf der Primärseite der Übertrager T1, T2, T3 kann alternativ oder zusätzlich auch eine Umschaltung auf der Sekundärseite der Übertrager T1, T2, T3 erfolgen, also auf der Seite des Antriebsmotors 4. In einem anderen Beispiel kann auch eine Mischform aus primärer und sekundärer Umschaltung, welche vielfältige Permutationen erlaubt, angewandt werden. Eine andere, Bezüglich der Auslegung der Wicklungen vorteilhafte Ausführungsform mit einer gemeinsamen Primärwicklung und mehreren wahlweise schaltbaren Sekundärwicklungen ist z.B. in Fig. 4 gezeigt.

Die hier beispielhaft gezeigte, spezielle Ausführungsform mit einem Einphasen-Synchronmotor, erfordert gegenüber einer erfindungsgemäss ebenfalls realisierbaren mehrphasigen Varianten entsprechend nur einen Teil des Schaltungsaufwands in der Ansteuerung. Speziell muss dabei nur für den ersten Gang die Bedingung für das Anfahren des Einphasen-Drehfeldmotor 4 gegeben sein, also zwingend der Hilfsstrang 70 zum Starten des Einphasen-Drehfeldmotors 4 gegenüber dem Hauptstrang 71 phasenverschoben bestromt sein. Die Phasenverschiebung zum Anlauf des Motors 4 kann dabei elektronisch (z.B. vom Stromrichter) oder durch einen rechnerisch entsprechend ausgelegten Kondensator 72 erzeugt werden, welcher auf die elektrischen Daten des Hilfsstrangs 70 im Startmodus des Einphasen-Drehfeldmotors 4 abgestimmt ist (speziell auf Spannung, Strom und Kreisfrequenz). Angefahren wird mit möglichst niedriger Anfahrfrequenz, damit der Rotor möglichst schnell synchronisiert.

Da sich die Spannung, der Strom und die Kreisfrequenz mit der Motordrehzahl ständig ändern, ändert sich auch die Impedanz der Ständerwicklungen und somit der COS (Phi). Die Transformatoren T1, T2 T3 sind daher vorzugsweise auf die jeweiligen ihren Gängen zugeordneten Motordrehzahlen abgestimmt, damit die elektrischen Bedingungen, insbesondere in den Übergangsbereichen, in welchen eine Gangumschaltung erfolgt, nicht zu sehr abweichen, was zu verlustbehafteten Ausgleichsvorgängen führen würde.

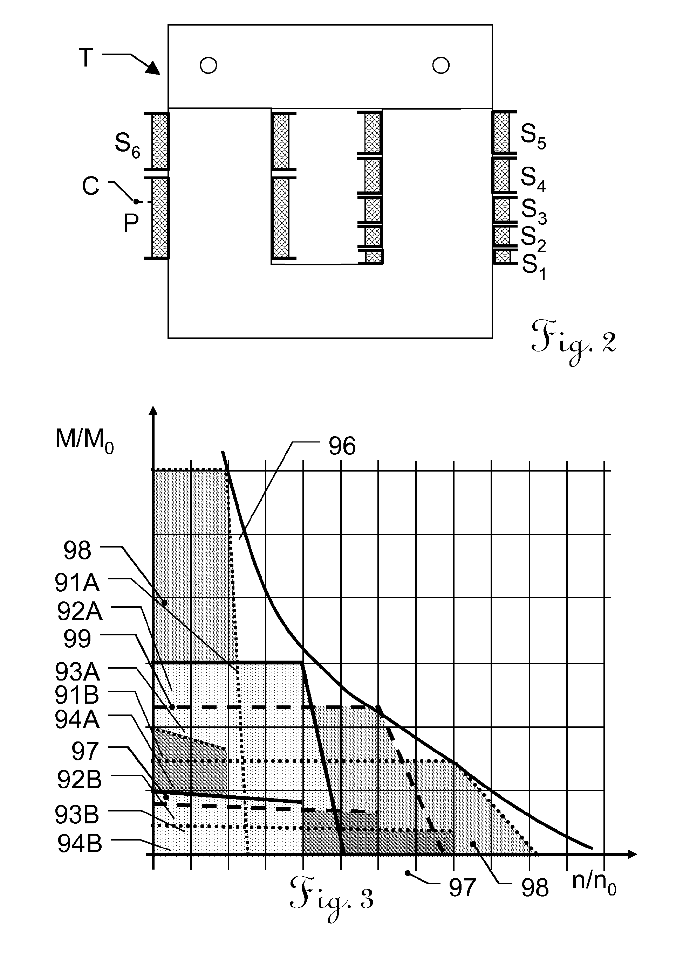

**Fig. 2** zeigt schematisch ein Beispiel einer Ausführungsform eines erfindungsgemässen Gang-Transformators mit einer zur Verbindung mit dem Stromrichterausgang vorgesehene Primärwicklung P, welche mit einer Zwischenabzapfung C ausgebildet sein kann, und mit sechs Sekundärwicklungen S₁, S₂, S₃, S₄, S₅ und S₆ hin zum Motor 4. Die Primär- und Sekundärwicklungen sind auf einem Eisenkern, respektive einem Kern aus einem anderen geeigneten Magnetkernmaterial für Transformatoren ausgebildet. Die Sekundärwicklungen habe dabei vorzugsweise dieselbe Spulenkernquerschnittsfläche, variieren aber in ihrer Spulenhöhe oder -länge. Vorzugsweise handelt es sich bei den Sekundärwicklungen um jeweils eigenständige Wicklungen, deren konstruktive Parameter wie, Windungszahl, Spulenkernquerschnittsfläche, Spulenlänge, Leiterdurchmesser, Wicklungsquerschnittsfläche, Wicklungsart, etc. jeweils dahingehende optimiert sind, um in dem mit der jeweiligen Sekundärwicklung abzudeckenden Bereich der Fahrgeschwindigkeit und somit der dabei vorherrschenden elektrischen Bedingungen wie Frequenzbereich, Spannungsbereich und Strombereich eine optimale Leistungsübertragung, speziell einem möglichst hohen COS (Phi)-Wert zu erzielen. Insofern dabei eine vorteilhafte Auslegung der konstruktiven Parameter der Sekundärwicklungen im Sinne eines hinreichend hohen Leistungsfaktors durchführbar ist, können aber alternative Ausführungen auch als Spartransformatoren oder als Ringkerntrafo, mit einer Nutzung von mehreren Permutationen und Kaskadierungen der Wicklungen, zusätzlichen Abzapfungen auf der Primär und oder Sekundärseite, etc. ausgebildet sein. Das erfindungsgemässe Prinzip lässt sich in gleicher Weise auf einphasige und mehrphasige Wechselstromantriebe anwenden, wobei bei letzteren vorzugsweise Drehstromtransformatoren zum Einsatz kommen

**Fig. 3** zeigt ein Beispiel eines entsprechend der vorliegenden Erfindung erzielbaren Zugkraftdiagramms. Dabei kann die Auslegung des oder der Transformatoren und deren Wicklungen beispielsweise derart erfolgen, dass man erfindungsgemäss ein Zugkraftdiagramm erhält, welches z.B. eine hohe Ähnlichkeit mit jenem von konventionellen Verbrennungskraft-Fahrzeugen aufweist - womit der Fahrer bestens vertraut ist. Das in der Figur gezeigte, beispielhafte Zugkraftdiagramm ähnelt etwa jenem eines Dieselfahrzeugs mit Turbolader.

Die mit durchgezogenen Linien gezeigten dynamische Grenzkennlinie 92A und statische Grenzkennlinie 92B entsprechen den Elektroantriebs-Kennlinien ohne Gangtransformator, bzw. mit einer 1:1 Übersetzung - und in diesem Beispiel dem zweiten Gang. Die dynamische Grenzkennlinie 91A und statische Grenzkennlinie 91B resultieren bei einer Transformation der Kennlinie über einen Gang-Transformator mit einer Spannungsuntersetzung (hin zum Motor) von kleiner 1 - also einem, gegenüber dem zuvor genannten zweiten Gang untersetzten, ersten Gang. Die Grenzkennlinien 93A und 93B entsprechen einem dritten Gang mit einer Spannungsuntersetzung von grösser 1 und die Grenzkennlinien 94A und 94B stellen die mit einem Transformator für einen vierten Gang transformierten Grenzkennlinie dar, dessen Spannungsuntersetzung nochmals grösser ist als jene im dritten Gang.

Im Gegensatz zu einer klassischen Nutzung der ohne erfindungsgemässe elektrische Gangumschaltung lediglich verfügbaren 1:1-Kennlinien 92A und 92B, kann somit eine bessere Näherung an die theoretische Idealkennlinie 96 des Zugkraftdiagramms erzielt werden. Speziell ist somit ein Betrieb des Fahrzeugs in den ohne Gang-Transformatoren nicht verfügbaren, erweiterten Bereichen 97 resp. 98 möglich, insbesondere ohne dabei den Elektrospeicher 3 mit mehr Strom zu belasten oder mit einer höheren Spannung auslegen zu müssen. Der ohne erfindungsgemässen Elektro-Gangumschalter 50 eingeschränkte Betriebsbereich 99, wird mit der vorliegenden Erfindung deutlich erweitert. Neben dem hier gezeigten Ansatz einer möglichst guten Anpassung an das klassische Verhalten von Verbrennungskraftfahrzeugen, können mit der vorliegenden Erfindung aber auch andere - bis dato unbekannte, unmögliche oder unübliche - Antriebskonzepte entwickelt und realisiert werden.

Dabei kann die Batterie 3 immer in ihrem spezifizierten vorteilhaften Betriebsbereich betrieben werden, der Antrieb 4 aber wahlweise auch mit einer höheren Spannung oder einem höheren Strom versorgt werden, welche ausserhalb des vorteilhaften Betriebsbereichs der Batterie liegen würden. Dabei kann beispielsweise im Gegensatz zu einer reinen PWM-Modulation der Batteriespannung, die Batteriegleichspannung auch niedriger als die höchstmögliche Motorspannung sein.

In einer speziellen Ausführung kann beispielsweise der elektrische Energiespeicher 3 als Niederspannungs-Batteriepakte ausgebildet sein, welches also speziell eine Nennspannung über der Kleinspannungsgrenze von 120V DC und unter der Hochspannungsgrenze von 1500V DC aufweisen kann, insbesondere z.B. die bereits erwähnten Nennspannungen in einem Bereiche um 200V oder um 400V. Der Elektrospeicher 3 kann dabei im unteren Bereich des Fahrzeugs, speziell im unteren Drittel der Fahrzeughöhe, also etwa im Fahrzeugboden, angeordnet sein, um einen tief liegenden Schwerpunkt zu erzielen. In einer Ausführung ohne den im Folgenden bezüglich einer anderen Ausführungsform beschriebenen Overdrive-Gang, kann die Nennspannung des Elektrospeichers 3 dabei die höchste auftretende Spannung im Leistungskreis des Antriebssystems des Fahrzeugs (also im Pfad des Antriebsleistungsflusses von Elektrospeicher 3 bis Elektroantrieb 4) darstellen. Es können also beispielsweise in einer speziellen Ausführungsform alle Spannungsübersetzungsverhältnisse von einer höheren Spannung am Stromrichter hin zu einer gegenüber dieser niedrigeren oder gleich grossen Spannung am Elektroantrieb 4 gerichtet sein.

Dabei kann in einer Ausführungsvariante also z.B. die Primärwicklung P des Wechselstrom-Transformator-Systems T direkt am Ausgang des Maschinen-Stromrichters 20, welcher eine frequenz- und/oder stromgeregelte Wechselspannung liefert, angeschlossen sein. Entsprechend der Erfindung können dann die unterschiedlichen elektrischen Übersetzungsverhältnisse schaltbar sein, indem mit der Schalteinrichtung wahlweise jeweils eine der Sekundärwicklungen S₁, S₂, S₃, S₄, S₅ einem als Drehfeldmaschine ausgeführten Elektroantrieb 4 zugeschaltet wird. Dabei ist die Schalteinrichtung zur Steuerung des Stromflusses von den Sekundärwicklungen S₁, S₂, S₃, S₄, S₅ zu einem permanentmagnetisch erregten Wechselstrom-Synchronmotor 4 ausgebildet, wobei die unterschiedlichen Induktionsspannungen und -ströme des Synchronmotors 4 in Abhängigkeit von dessen Drehzahl mittels einer Schaltstufe (als einem Gang) der Schalteinrichtung jeweils mit den zugehörigen, passenden Sekundärwicklungen S verbunden werden.

Innerhalb der stufig geschalteten Gänge erfolgt ein vorzugsweise synchroner Betrieb des Motors 4, mit dem Stromrichter 20, bei welchem Strom, Spannung und Frequenz in bekannter Weise gesteuert oder geregelt werden. Da die Frequenz des Wechselstroms proportional zur Drehzahl ist, können die jeweiligen Transformatoren auch auf die zu dem jeweiligen Transformator-Gang zugehörigen Frequenz-, Strom- und Spannungsbereich abgestimmt und in ihrem Wirkungsgrad optimiert sein. Erfindungsgemäss ist jeder Transformator-Gang zur Abdeckung eines im allgemeinen definierten Drehzahl- und Somit Frequenzbereichs vorgesehen. Insbesondere kann dabei auch ein automatischer Gangwechsels implementiert werden, bei welchem von einer elektronischen Steuereinheit jeweils ein der aktuellen Fahrsituation angepasster Gang-Transformator, bzw. allenfalls eine direkte Verbindung zuschaltet wird. Bei einer solchen Automatik können auch andere Parameter wie z.B. Batteriezustand, Temperaturwerte, Steigung, Zuladung, selektiertes Fahrprogramm etc. berücksichtigt werden.

Wird eine Asynchronmaschine als Fahrmotor genutzt, so kann dabei eine untere Grenzfrequenz am Ausgang des Stromrichters definiert sein, welche von dem Transformator des ersten Gangs übertragbar ist. In einer anderen Ausführungsform kann auch ein asynchroner Betrieb eines Synchron- bzw. Hybrid-Motors 4 beim Anlauf angewandt werden, bei welchem niedrige Frequenzen bei und nahe bei Null vermieden werden. Der Effekt ist dabei ähnlich einer konventionellen mechanischen Kupplung, mit welcher ebenfalls bei einer Motordrehzahl grösser der Abtriebsraddrehzahl eine asynchrone Drehzahlangleichung bis hin zur Synchronität erfolgt. Dabei kann z.B. auch eine allenfalls vorhandene Ist-Positions-Rückführung genutzt werden um einen möglichst vorteilhaften Vortrieb zu erzielen.

In einer sehr speziellen Ausführungsform kann auch die Schaltfrequenz des Fahrantrieb-Stromrichters 20 als Übertragungsfrequenz der Gang-Transformatoren genutzt werden und nicht wie zuvor die Frequenz des damit generierten Stromes für das Motor-Drehfeld an sich - womit auch eine motorseitige Drehfeldfrequenz in einem Bereich um Null induktiv übertragbar ist.

**Fig. 4** zeigt beispielhaft ein vereinfachtes Blockdiagramm einer ersten Ausführungsform eines erfindungsgemässen Elektro-Gangumschalters, bei welchem entsprechend der Fahrgeschwindigkeit zwischen unterschiedlichen (in Block 50 mit "S" markierten) Sekundärwicklungen umgeschaltet wird. Dabei sind die Leiterpfade, welche grosse Ströme führen mit dickeren Linien gezeigt als jene für niedrigere Ströme. Die elektrische Energie aus der Batterie 3 wird über den Stromrichter 20 in einen Wechselstrom umgewandelt, welcher dann über ein Schaltelement der Schalteinrichtung wahlweise an die Primärwicklung P des Transformators oder direkt an den Elektroantrieb 4 geleitet wird.

Der Transformator und die Schalteinrichtung ist dabei derart angeordnet und ausgebildet, dass die Primärseite P dabei über die Schalteinrichtung mit dem Wechselrichter verbindbar ist und die Sekundärseite S über die Schalteinrichtung mit dem Fahrantriebsmotor 4 verbindbar ist. Mit unterschiedlichen Schaltstellungen der Schaltelemente der Schalteinrichtung in Block 50 ist zwischen unterschiedlichen Spannungsübersetzungsverhältnissen der Wechselspannung vom Stromrichter zum Elektromotor 4 umschaltbar.

An der Sekundärseite "S" des Gangtransformators wird über eines der Schaltelemente a,b,c,d,e,f der Schalteinrichtung die elektrische Energie von einer der Sekundärwicklungen S oder von der zuvor genannten Direktverbindung B zum Antriebsmotor 4 geleitet. Dabei sind beispielsweise Schaltstufen als Kombination des Schliessens von Schaltelement A oder C mit einem der Schaltelemente a,b,c,d,e oder f oderaber des alleinigen Schliessens von Schaltelement B möglich. In einer in der folgenden Fig. 5 erläuterten beispielhaften Ausführungsform wird das Schaltelement C jedoch nur in Kombination mit Schaltelement f als so genannter Overdrive Gang mit einer Übersetzung von Stromrichterausgangsspannung/Elektroantriebseingangsspannung mit einem Wert von kleiner 1 verwendet.

Innerhalb eines mit jeweils einer dieser Schaltstufen abgedeckten Fahrbereichs wird - mittels einer Anpassung der Ausgangsspannung bzw. Ausgangsstrom und der Frequenz durch den Stromrichter 20 - die dem Motor 4 zugeführter Versorgung an die Fahrgeschwindigkeit und Fahrsituation angepasst. Bei der Auslegung der Transformatoren, respektive Ihrer Primärwicklungen P und Sekundärwicklungen S für die einzelnen Schaltstufen und der Spreizung zwischen den Schaltstufen ist im Hinblick auf den Wirkungsgrad insbesondere darauf zu achten, dass der dabei erzielte Leistungsfaktor COS (Phi) über den dabei entstehenden ganzen, speziell aber im dominierenden, Fahrzeuggeschwindigkeitsteilbereich oder Betriebsbereich möglichst hoch ist. In der hier gezeigten Ausführungsform lässt sich beispielsweise über den erfindungsgemäss in einzelne Fahrzeuggeschwindigkeitsteilbereiche aufgeteilten, gesamten Fahrzeuggeschwindigkeitsbereich ein durchschnittlicher COS (Phi) von ca. 0,94 erzielen, speziell mit einer unteren Schwankungsgrenze im ungünstigsten Betriebsfall bei niedrigen Geschwindigkeiten von grösser 0,8 bzw. grösser 0,88. Die Schaltvorgänge können von einer Ansteuerungslogik automatisch und für den Fahrer quasi kontinuierlich durchgeführt werden. Ein entsprechendes mechanisches Automatikgetriebe mit vergleichbaren Kennwerten würde einen enorm höheren konstruktiven Aufwand mit sich bringen.

**Fig. 5** zeigt eine zu Fig. 4 zugehörige Tabelle, mit welcher die Schaltvorgänge des elektrischen Stufengetriebes mit beispielhaften 8 Gängen dargestellt werden. Dabei wird in der ersten Spalte die Fahrgeschwindigkeit v in Schritten von 5 bis 150 km/h angegeben und daneben die jeweils aktivierten Schaltelemente V auf der Primärseite, also der Schaltelemente A, B und C in nebenstehender Fig. 4. Daneben sind jeweils die Schaltstellungen der zugehörigen Schaltelemente a bis f der nebenstehenden Figur 4 gezeigt, wobei ein * oder ein x jeweils einen geschlossenen Schalter darstellt. Die mit * markierte Schaltstellung ist bei jener Geschwindigkeit v, auf welche die Konstruktionsdaten (also die elektrisch konstruktive Auslegung) der zugehörigen Sekundärwicklung ausgelegt sind, um einen möglichst hohen Leistungsfaktor zu erzielen. In den letzten drei Spalten ist die fortlaufende Nummer des Ganges (im gezeigten Beispiel von 1 bis 8) angegeben, sowie das dabei vorherrschende Übersetzungsverhältnis i, welches auch das Spannungsübersetzungsverhältnis (Primär zu Sekundär, von 12 bis 0,8) der jeweiligen Schaltstufe darstellt, und zusätzlich jeweils die dabei in diesem exemplarischen Beispiel resultierenden Werte ϕ des Sprungfaktors der Übersetzung, welche angepasst an die Betriebsanforderungen des Fahrzeugs, durch eine andere Auslegung der Spannungsübersetzungsverhältnisse, auch anders abgestuft sein können.

## Patentansprüche

1. Kraftfahrzeug, insbesondere schienenungebundenes Straßenfahrzeug, mit
■ einem Wechselstrom-Elektroantrieb (4) als Fahrantrieb, dessen Drehmoment an zumindest ein Antriebsrad (7) des Kraftfahrzeugs übertragbar ist,
■ einem Elektrospeicher (3) zur Bereitstellung von elektrischer Energie für den Fahrantrieb, insbesondere wobei der Elektrospeicher (3) im unteren Drittel der Fahrzeughöhe angeordnet ist, und
■ einem Stromrichter (20) zur Umwandlung einer Gleichspannung des Elektrospeichers (3) in eine Wechselspannung, mit welcher der Elektroantrieb (4) angesteuert wird,
**dadurch gekennzeichnet, dass**
ein elektrischer Gangumschalter (50) vorgesehen ist, welcher als eine elektrische Schalteinrichtung zwischen dem Stromrichter (20) und dem Elektroantrieb (4) ausgebildet ist, mit welcher Schalteinrichtung vom Stromrichter (20) zum Elektroantrieb (4) zwischen unterschiedlichen Spannungsübersetzungsverhältnissen für die Wechselspannung umschaltbar ist, wobei zumindest eines der Spannungsübersetzungsverhältnisse mit einem Transformator (T) für die Wechselspannung ausgebildet ist.

2. Kraftfahrzeug nach Anspruch 1, **dadurch gekennzeichnet, dass** der Elektroantrieb (4) als permanentmagneterregter Synchron-Elektromotor ausgebildet ist, insbesondere als Einphasen-Drehfeldmotor mit einem phasenverschobenen Hilfsstrang (70), speziell mit einem Anfahrkondensator (72) zur Ansteuerung des Hilfsstrangs (70).

3. Kraftfahrzeug nach einem der Ansprüche 1 oder 2,
**dadurch gekennzeichnet, dass** der Elektrospeicher (3) als Niederspannungs-Batterie, insbesondere mit einer Spannung über dem Kleinspannungsgrenzwert von 120V DC und unter der Hochspannungsgrenze von 1500V DC, speziell mit etwa 200V oder 400V ausgebildet ist.

4. Kraftfahrzeug nach einem der Ansprüche 1 bis 3, **dadurch gekennzeichnet, dass** eine Ansteuerungslogik derart ausgebildet ist, dass innerhalb eines der, mit der Schalteinrichtung selektierten Spannungsübersetzungsverhältnisse, jeweils eine gesteuerte und/oder geregelte Ansteuerung des Elektroantriebs (4) mit einer Frequenz- und/oder Spannungsvariation der Wechselspannung durch den Stromrichter (20) erfolgt.

5. Kraftfahrzeug nach einem der Ansprüche 1 bis 4, **dadurch gekennzeichnet, dass** die Schalteinrichtung und der Transformator (T) derart ausgebildet und angeordnet sind, dass mittels der Schalteinrichtung
■ eine von mehreren Primärwicklungen (P) des Transformators (T) mit dem Stromrichter (20) und/oder
■ eine von mehreren Sekundärwicklungen (S) des Transformators (T) mit dem Elektroantrieb (4) verbindbar ist,
insbesondere wobei zumindest eines der Spannungsübersetzungsverhältnisse motorseitig eine Sekundärspannung aufweist, welche niedriger ist als eine zugehörige Primärspannung vom Stromrichter (20).

6. Kraftfahrzeug nach einem der Ansprüche 1 bis 5, **dadurch gekennzeichnet, dass** ein gesamter Fahrzeug-Geschwindigkeitsbereich des Kraftfahrzeugs in mehrere, insbesondere 5 bis 9, speziell 7, insbesondere in etwa gleich grosse, Teil-Fahrgeschwindigkeitsbereiche und somit Drehzahlbereiche des Elektromotors (4) aufgeteilt ist, und für jeden dieser Teil-Fahrgeschwindigkeitsbereiche jeweils eines der Spannungsübersetzungsverhältnisse - als Gang des Gangumschalters (50) - ausgelegt ist.

7. Kraftfahrzeug nach Anspruch 6, **dadurch gekennzeichnet, dass** der Transformator (T) eine Mehrzahl von Sekundärwicklungen (S) aufweist, wobei die elektrischen Konstruktionsdaten jeder der Sekundärwicklungen (S) jeweils speziell für einen der Teil-Fahrgeschwindigkeitsbereiche, insbesondere für den diesem Teil-Fahrgeschwindigkeitsbereich zugehörigen diskreten Drehzahl- und somit Spannungs-,Strom- und Frequenzbedingungen des Elektroantriebs 4, ausgebildet ist.

8. Kraftfahrzeug nach einem der Ansprüche 5 bis 7, **dadurch gekennzeichnet, dass** jede Sekundärwicklung (S) ihre eigene elektrisch konstruktive Auslegung mit charakteristischen Daten bezüglich Induktivität, Realwiderstand, Windungszahl, Spulenlänge und/oder Drahtquerschnitt aufweist,
welche derart ausgelegt sind, dass ein resultierender Leistungsfaktors COS (Phi) in einem, dem jeweiligen Übersetzungsverhältnis zugehörigen Teil-Fahrgeschwindigkeitsbereich optimiert ist, speziell, dass ein COS (Phi) des Transformators (T) einem Leistungsfaktor COS (Phi) des Elektroantriebs (4) in dem entsprechenden Teil-Fahrgeschwindigkeitsbereich des Fahrzeugs und dem zugehörigem Drehzahlbereich des Elektroantriebs (4) angepasst ist.

9. Kraftfahrzeug nach einem der Ansprüche 5 bis 8, **dadurch gekennzeichnet, dass** die Primärwicklung (P) mit mehrere Anschlüsse für eine Einspeisung vom Stromrichter (20) ausgebildet ist und die Schalteinrichtung mit einem Schaltelement zwischen dem Stromrichter (20) und dem Transformator (T) ausgebildet ist, mit welchem jeweils eine der Einspeisungen der Primärwicklung (P) zum Stromrichter (20) zuschaltbar ist.

10. Kraftfahrzeug nach einem der Ansprüche 1 bis 9, **dadurch gekennzeichnet, dass** der Elektrospeicher (3) die höchste im Antriebs-Leistungskreis des Elektrofahrzeugs vorherrschende Spannung aufweist, insbesondere wobei die Nennspannung des Elektrospeichers (3) beim speisen des Elektroantriebs 4 stets grösser oder gleich einer am Elektroantrieb (4) auftretenden Spannung ist.

11. Kraftfahrzeug nach einem der Ansprüche 5 bis 9, **dadurch gekennzeichnet, dass** der Transformator (T) derart ausgelegt ist, dass zumindest eine von der Schalteinrichtung als Overdrive-Gang schaltbare Kombination einer Einspeisung der Primärwicklung (P) und einer Sekundärwicklung (S) eine motorseitige Sekundärspannung ergibt, welche höher ist als die Spannung an der Primärwicklung.

12. Kraftfahrzeug nach einem der Ansprüche 5 bis 11, **dadurch gekennzeichnet, dass** die Schalteinrichtung mit Schaltelementen zwischen der Sekundärwicklung (S) und dem Elektromotor (4) ausgebildet ist, welche derart konfiguriert und angeordnet sind, dass der Elektromotors (4) jeweils selektiv an eine von mehreren Sekundärwicklungen (S) zuschaltbar ist, insbesondere wobei die Schaltelemente als Leistungselektronik-Schaltelemente ausgebildet sind, speziell mit mehreren parallel geschalteten Schaltelementen.

13. Kraftfahrzeug nach einem der Ansprüche 1 bis 12, **dadurch gekennzeichnet, dass** eines der Spannungsübersetzungsverhältnisse als eine von der Schalteinrichtung schaltbare, direkte elektrische Verbindung (53) zwischen dem Stromrichter (20) und dem Elektroantrieb (4) ausgebildet ist.

14. Kraftfahrzeug nach einem der Ansprüche 5 bis 13, **dadurch gekennzeichnet, dass** die Primärwicklung (P) und die Sekundärwicklung (S) zumindest annähernd gleich grosse Spulenquerschnittsflächen aufweisen und/oder der Transformator (T) einen Zwei-Schenkel-Eisenkern aufweist, wobei ein erster Schenkel lediglich eine oder mehrere Sekundärwicklungen (S) aufnimmt und der zweiter Schenkel die Primärwicklung (P) und optional eine oder mehrere Sekundärwicklungen (S) aufnimmt.

15. Verfahren zur elektrischen Gangumschaltung in einem batteriebetriebenen, elektrisch angetriebenen Strassenfahrzeug, bei welchem ein Umschalten zwischen
■ einem ersten Gang, in welchem ein erstes Spannungsübersetzungsverhältnis zwischen einer wechselgerichteten Batteriespannung und einer, einem Fahrantrieb-Elektromotor (4) zugeführten Spannung vorliegt, und
■ zumindest einem zweiten Gang, in welchem ein von dem ersten Spannungsübersetzungsverhältnis abweichendes, zweites Spannungsübersetzungsverhältnis zwischen der wechselgerichteten Batteriespannung und der dem Fahrantrieb-Elektromotor (4) zugeführten Spannung vorliegt,
durchgeführt wird, und innerhalb eines der Gänge die wechselgerichtete Batteriespannung mit einem Stromrichter (20) in Ihrer Spannung und Frequenz variiert wird, insbesondere wobei zumindest das erste und/oder eines der zweiten Spannungsübersetzungsverhältnisse mit einer induktiven Übertragung in einem Transformator (T) erfolgt.
